Europäisches Patentamt

European Patent Office

Office européen des brevets

(11) Publication number: **0 254 015**
**A1**

## EUROPEAN PATENT APPLICATION

(21) Application number: **87108439.8**

(22) Date of filing: **11.06.87**

(51) Int. Cl.⁴: **G09B 21/02** , G06F 3/023

(30) Priority: **18.06.86 IT 1250086**

(43) Date of publication of application:
**27.01.88 Bulletin 88/04**

(84) Designated Contracting States:
**AT BE CH DE ES FR GB GR LI LU NL SE**

(71) Applicant: **Fanara, Alfredo**
**Viale Modugno 13/1**
**I-16156 Genova(IT)**

(72) Inventor: **Fanara, Alfredo**
**Viale Modugno 13/1**
**I-16156 Genova(IT)**

(74) Representative: **Ferrarotti, Giovanni**
**Studio Consulenza Tecnica Dr. Ing. Giovanni**
**Ferrarotti Via Alla Porta Degli Archi 1/7**
**I-16121 Genova(IT)**

(54) **Type slug guided digital input of alphanumerical and/or special symbols in data processing systems.**

(57) This Patent covers a type slug for guided digital input of symbols in data processing systems. This type slug (1, 1') has recessed (1, 2, 3, 4) or prominent (1', 2', 3', 4') shapes or profiles along which sensors connected to a data processor are located, so that by following the profiles with a finger along a prefixed path, it will be possible to create symbols which the processor can recognize, thus facilitating the utilization of such equipment, particularly by blind and handicapped persons. This type slug (1, 1') also allows for miniaturization of the processor assembly which can thus be built for pocket use or watch type, to take notes or other data to be collected in special and uncomfortable situations.

Fig. 1

## Type slug for guided digital input of alphanumerical and/or special symbols in data processing systems

This Patent covers a type slug for guided digital input of alphanumerical and/or special symbols in data processing systems.

It is known that data input in a processor is normally achieved by means of a keyboard similar to a typewriter keyboard.

However, this data entry system has numerous drawbacks.

The first disadvantage is that this keyboard cannot be adequately miniaturized, also because it would no longer be easy to handle.

A second drawback is that keyboard entry requires visual checking so that the normal keyboard cannot easily be used by sightless or poor sighted persons.

Then there is the fact that the keyboard cannot be used by individuals having a handicap of various nature such as those suffering from dysgraphia or dyspraxia, for whom typewriting is particularly difficult.

Another disadvantage concerns the impossibility of miniaturize the keyboard and the attention to be paid during its use does not permit its utilization in special situations, such as for instance to take down notes, names, addresses etc. along the way or when driving a car.

An unguided direct digital data input device has already been developed to obviate the bulky size of the keyboard. By this device, the finger freely "draws" the symbol which is captured by special sensors and transmitted to the processing system.

However, this system too has serious drawbacks.

First of all, the finger freely draws the symbol and the symbols thus drawn are not always correctly "captured" by the sensor since deviations from the prefixed figure may impair its identification which thus will be incorrect.

Another disadvantage of unguided direct digital input of the symbol concerns the above mentioned handicapped persons who will be unable or will have much difficulty in symbol free-hand drawing.

This Patent has the aim to provide a device for data input in the processor which eliminates all above mentioned drawbacks. According to the Patent, the data are entered by means of a type slug provided with proper recessed or prominent profiles along which sensors are located so that, when following with a finger the profile of these symbols, according to prefixed paths, it will be possible to transmit exact symbols to the processor without risking identification errors. The type slug also permits hardware miniaturization and can thus be easily used by handicapped and blind persons who will shape the symbols by means of guide-lines. The type slug can also be used without paying too much attention, since the symbols can be shaped without looking at them.

Obviously, this data input system by means of a shaped type slug or plate cannot replace the normal keyboard which are much more efficient for normal office work; this is due to the fact that creation of the symbols on the type slug requires much time. On the other hand, this type slug may provide indispensable integration for handicapped individuals and may also be useful for commonly used portable equipment which may be miniaturized to watch size.

This guided type slug will also permit to create any other kind of script such as Latin, or Greek letters as well as any symbols not provided on a normal keyboard. With special type slugs it will also be possible to obtain the ideographical symbology of Cinese and Japanese script.

The type slug will also make it possible to use the BRAILLE alphabet as normally used by the blind.

The invention in question is illustrated in its practical implementation in the attached drawings, in which:

Fig. 1 shows a top view of the type slug provided with recesses for guided digital input of the symbols in a data processing system,

Fig. 2 shows a side view of the type slug illustrated in Fig. 1,

Fig. 3 shows a top view of a digital type slug with prominent guide profiles,

Fig. 4 shows a lateral view of the type slug illustrated in Fig. 3,

Fig. 5 to 9 show various symbolisms which can be obtained with the type slugs 1 and 3.

With reference to these illustrations, the type slug 1 is provided with numerous recessed shapes for finger guide and in detail, for exemplification purposes, the profile 2 in the central zone has the shape of concentric radii surrounded by a square recess, to be used for formation of the main symbols (letters and digits) and accessory signs, the lower straight shape 3 can be used to underline the symbols, the upper straight shape 4 can be used to recognize overlined upper case letters from (not overlined) lower case letters; the whole being completed by the roof shaped profiles 5, which will be particularly useful for accents or special signs.

Each shape or profile will have one or more sensors which are excited by the passing finger to transmit a signal to the processor. A multiple number of sensors is deemed preferable for each shape so as to eliminate by check logic any writing errors which are likely to occur with only one sensor.

Obviously, the type slug 1 is connected to the processor which will provide, as usual, for interpreting, storage and possibly also for display. Data transmission from the processor to a personal computer has also been envisaged for subsequent processing or filing, as well as connection to micro-dispaly units, television screens, tactile read-out devices and even symbol "vocoders".

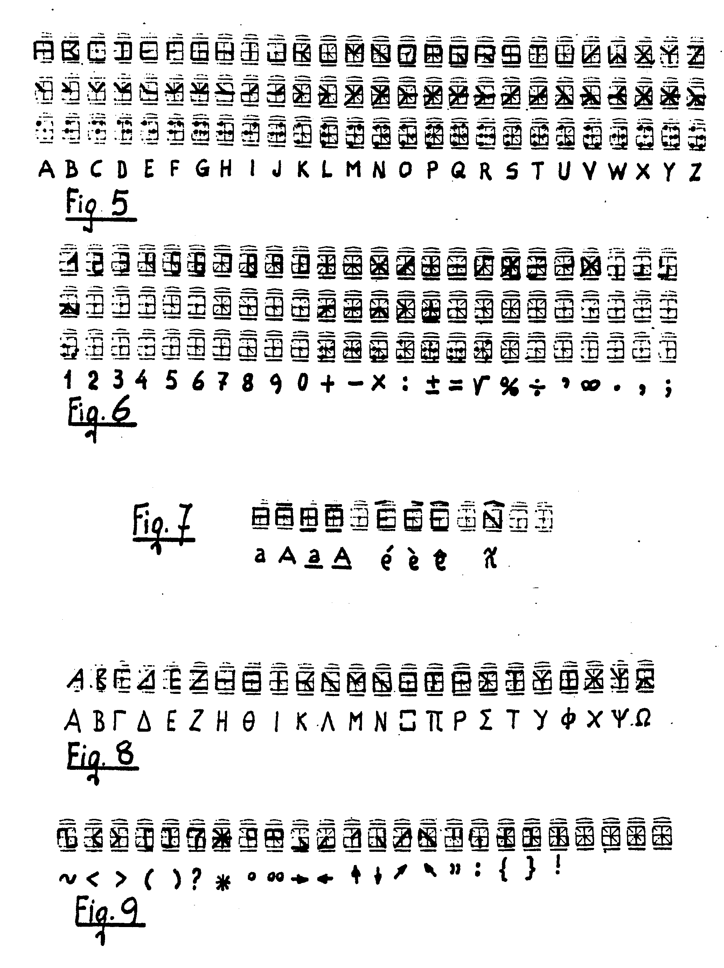

Fig. 5 shows the guided digital paths to be followed on the type slug to enter the alphabet letter in the processor; in detail:
-the first line shows the path to be followed on the type slug to create capital letters which, in our case are the basic script letters;
-the second line shows the paths to create BRAILLE script letters, in segments;
-the third line shows the current punctiform BRAILLE script in points;
-the fourth line shows normal block letters.

Fig. 6 illustrates the corresponding poths for numerical and some mathematical signs.

Fig. 7 shows how to use the accessory lines 3, 4 and 5 of the type slug.

For instance "A" is considered as "a", while "A̱" is considered as "A".

The roof shaped sections 5 will help to form acute, grave and circumflex accents, as well as the Spanish cedilla.

The line 5 is used for underlining of the symbols.

Fig. 8 shows the paths to form Greek letters (first line) corresponding to normal letters (second line). A special segmental or punctiform script, not illustrated herein, is envisaged for blind persons.

Fig. 9 finally shows some special, less frequently used, symbols.

The type slug system will therefore be particularly useful for:
-those who are born blind and who only know BRAILLE script;
-the tardive blind who have learned the alphanumerical symbolism and who can therefore enter these symbols in the processor and can read them with the aid of a tactile device;
-poor sighted persons who can normally write the alpha-numerical symbols and can read them on special video-displays provided the size, intensity and colour is adjusted to their specific needs;
-persons disabled by spasticity who will now be able to write thanks to the guide lines on the type slug, while they will correctly receive by display as well as by audio;

in addition the device is a handy and reliable gadget for whoever needs an electronic memorandum on which to file addresses, notes, ideas, letter drafts, etc. in any and all situations.

By this Patent, the BRAILLE symbology is extended from punctiform to segmental script created by the segmental configuration of the type slug guides.

This means that the segmental BRAILLE PATH is added to the PUNCTIFORM BRAILLE script which will make writing much easier and more reliable for the blind. According to the Patent, it will also be possible to adopt both writing systems by selecting the coding to be used.

For this purpose, both BRAILLE scripts (punctiform and segmental) have been included in Fig. 5.

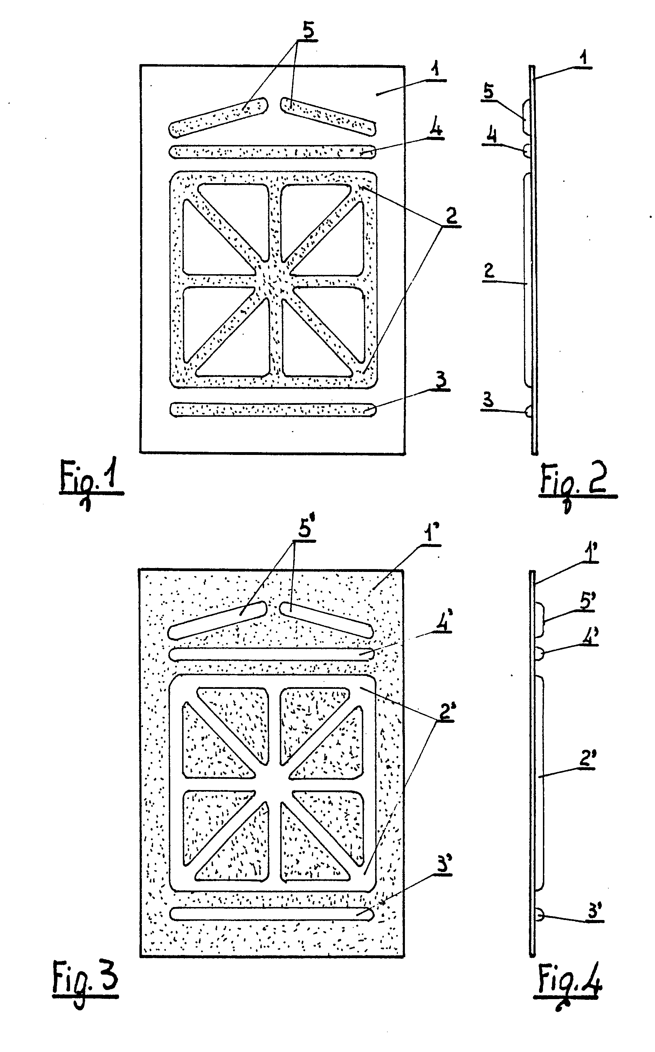

The type slug illustrated in Fig. 1 and 2 shows the recessed shapes for digital guide, but the same digital guide can also be provided by the type slug 1' featuring the prominent shapes 1', 2', 3', 4', 5', as shown in Fig. 3 and 4.

These digital guide shapes are illustrated only for indicatory purposes since other shapes are of course possible for guided formation of other symbols according to different scripts and particular signs, these shapes being located on the type slug surface.

As explained before, type slugs may also be provided for the creation of ideographic scripts for processor input.

The type slug device, object of this Patent can also be miniaturized for pocket use or watch type, it may even incorporate chronometer-calendar and minicomputer functions so as to obtain a really practical and efficient unit.

## Claims

1. Type slug for guided digital input of alphanumerical and/or special symbols in data processing systems, **characterized** by the fact that a type slug (1, 1') is provided with recessed (2, 3, 4, 5) or prominent shapes (2', 3', 4', 5') along which sensors are connected to a data processor, these shapes being such as to guide the finger in forming symbols by following the shapes according to prefixed paths that are recognized by the computer, so that any person, and especially blind and handicapped individuals can enter data in the processor with the help of the type slug and guided symbology, while also permitting to take notes, etc., in special or uncomfortable situations.

2. Type slug as described in claim N° 1, **characterized** by the fact that it is devised to receive the Latin alphabet, and all necessary numbers and special signs.

3. Type slug as described in claim n° 1, **characterized** by the fact that it can also receive the Greek script.

4. Type slug as described in claim n° 1, **characterized** by the fact that it can also receive ideographic scripts.

5. Type slug as described in claim n° 1, **characterized** by the fact that it can receive the punctiform or the segmental BRAILLE script.

6. Type slug as described in claim n° 1, **characterized** by the fact that the processor can be connected to a tactile read-out device or to a "vocoder" when used by blind persons.

7. Type slug as described in claim n° 1, **characterized** by the fact that the processor can be connected to a video or audio when used by poor sighted persons.

8. Type slug as described in claim n° 1, **characterized** by the fact that the processor can be connected to a personal computer for storage or reprocessing of the input data.

Fig. 1

Fig. 2

Fig. 3

Fig. 4

A B C D E F G H I J K L M N O P Q R S T U V W X Y Z

Fig. 5

1 2 3 4 5 6 7 8 9 0 + − × : ± = √ % ÷ ' ∞ . , ;

Fig. 6

Fig. 7

a A a A  é è e  𝒳

A B Γ Δ E Z H θ I K Λ M N ⊓ Π P Σ T Y φ X Ψ Ω

Fig. 8

~ < > ( )? * ° ∞ → ← ↑ ↓ ↗ ↘ " : { } !

Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | MEDICAL & BIOLOGICAL ENGINEERING & COMP., vol. 17, no. 4, July 1979, pages 489-491; Z.F. JOUBERT "Fingercom-an electronic communicator for the disabled" * whole document * | 1,2 | G 06 F 3/023<br>A 61 F 4/00<br>G 09 B 21/02<br>B 41 J 7/00 |
| A | idem | 5 | |
| | --- | | |
| X | DE-A-2 613 906 (SEELBACH) * page 3, lines 1-4, 12-15; page 4, lines 1-12, 20 - page 5, lines 8, 24 - page 7, line 13; page 8, line 27 - page 9, line 11; claims 1, 3, 4; figures 1-3 * | 1,2 | |
| | --- | | |
| A | DE-U-8 527 888 (PAPENMEIER) * claim 1 * | 6,7 | **TECHNICAL FIELDS SEARCHED (Int. Cl.4)** |
| | --- | | G 09 B 21/00 |
| A | DE-A-2 906 943 (ENDFIELD) * page 6, line 27 - page 7, line 14; page 8, lines 3-16; page 10, line 28 - page 11, line 12; figures 1, 3, 4 * | 1,2,8 | G 06 F 3/00<br>B 41 J 7/00<br>A 61 F 4/00 |
| | ----- | | |

The present search report has been drawn up for all claims

| Place of search | Date of completion of the search | Examiner |
|---|---|---|
| BERLIN | 01-10-1987 | BEITNER M.J.J.B. |